# EUROPEAN PATENT APPLICATION

(11) **EP 0 726 409 A1**
(43) Date of publication of application: **14.08.1996**
(21) Application number: 95929236.8
(22) Date of filing: 25.08.1995
(51) Int. Cl.: F16F 15/02, F16F 15/30, C08L 21/00, B29C 35/02

(54) **DYNAMIC DAMPER AND MOLDING MATERIAL THEREFOR AND METHOD OF MANUFACTURING THE SAME**

(30) Priority: 29.08.1994 JP 203627/94
(71) Applicant: TOKAI RUBBER INDUSTRIES, LTD., Komaki-shi Aichi 485 (JP)
(72) Inventor: HAMADA, Masaaki, Tokai Rubber Industries, Ltd., Komaki-shi, Aichi 485 (JP); AOI, Takahiro, Tokai Rubber Industries, Ltd., Komaki-shi, Aichi 485 (JP)
(74) Representative: Pellmann, Hans-Bernd, Dipl.-Ing.
(86) International application number: JP9501701
(87) International publication number: WO9607036

(57) **Abstract**

The present invention relates to the art of a dynamic damper installed on a vibrating member to be damped, for reducing vibrations of the vibrating member. Technical objects of the present invention are to provide a dynamic damper which has a novel construction and which can be easily produced and tuned, a molding material thereof, and a method of producing the same.

The above objects may be accomplished by a dynamic damper (10) constructed according to the present invention, whrein a mass portion (14) is elastically supported by an elastic support portion (16) on the vibrating member (12), and wherein the mass portion (14) is formed of a composite body consisting of an elastic body and particles of a high specific gravity material which are dispersed in the elastic body, while the elastic support portion (16) is formed integrally with the elastic body of the composite body which constitutes said mass portion (14).

The present invention is applicable to a dynamic damper which is installed on the vibrating member in various mechanical devices such as an engine unit or an exhaust pipe, of an automotive vehicle, for reducing the vibrations of the vibrating member. The present invention provides advantages such as increased ease of manufacture and tuning, and improved durability of the dynamic damper.

## Description

### FIELD OF THE ART

The present invention relates to a dynamic damper installed on a vibrating member, a subject to be damped, for reducing vibrations of the vibrating member, and arts relating to the dynamic damper.

### BACKGROUND OF THE INVENTION

As one type of vibration damping device for reducing vibrations of a vibrating member in various mechanical devices, such as an engine unit or an exhaust pipe of an automotive vehicle, these is known a dynamic damper, which is constructed such that a mass member having a desired mass is elastically supported by an elastic support member for connection to the vibrating member which is a subject to be damped, as disclosed in laid-open Publication No. 2-9214 of examined Japanese Patent Application, laid-open Publication No. 2-31626 of examined Japanese Utility Model application, and laid-open Publication No. 3-33895 of examined Japanese Patent Application.

In the dynamic damper of this type, the natural vibration frequency of the dynamic damper must be tuned depending upon the frequency range of the vibrations of the vibrating member which are to be damped, by controlling the mass of the mass member, and the spring constant and damping coefficient of the elastic support member, so as to exhibit an excellent damping effect. To achieve an optimum tuning of the dynamic damper, the mass member is required to have a relatively large mass.

In the conventional dynamic damper, therefore, the mass member is generally formed of a metallic material, such as iron, and the elastic support member is adapted to be bonded to the mass member, as disclosed in the above-mentioned publications.

However, the conventional dynamic damper as described above requires not only the step of bonding the elastic support member to the metallic mass member, but also step of coating the surface of the mass member or covering the mass member with an elastic material of which the elastic support member is formed, so as to prevent the rusting of the metallic mass member. It is therefore extremely cumbersome and takes a long time to produce the dynamic damper.

Further, the dynamic damper of this type is generally produced such that the metallic mass member prepared is set in a mold for forming the elastic support member, and then a rubber material is injected into the mold, whereby the elastic support member is bonded to the mass member by vulcanization of the rubber material. It is also cumbersome to set the mass member in the mold, and therefore difficult to achieve a sufficient improvement in the production efficiency.

### DISCLOSURE OF THE INVENTION

The present invention was developed in view of the above described situation and it is therefore an object of the present invention to provide a dynamic damper having a novel construction, which does not require a special treatment for bonding an elastic support member to a mass member and a treatment for preventing the surface rusting of the mass member, and which can be easily produced, and to also provide a molding material and a method for producing the dynamic damper.

The above object may be accomplished by a dynamic damper according to the present invention, which is characterized by comprising: (a) a mass portion constituted by a composite body consisting of an elastic body and particles of a high specific gravity material which are dispersed in the elastic body, the high specific gravity material having a higher specific gravity than the elastic body; and (b) an elastic support portion which is formed integrally with the elastic body of the composite body which constitutes the mass portion, the elastic support portion being secured to a vibrating member so that the mass portion is elastically supported on the vibrating member by the elastic support portion.

The above object may also be accomplished by a molding material of a dynamic damper of the present invention, which is characterized in that: particles of a high specific gravity material are mixed with and thereby dispersed in a rubber material, said high specific gravity material having a higher specific gravity than an elastic body formed of the rubber material.

The above-object may also be accomplished by a method of producing a dynamic damper according to the present invention, which is characterized by comprising the steps of: (C) preparing a composite material by mixing a rubber material and particles of a high specific gravity material having a higher specific gravity than an elastic body formed of the rubber material, such that the particles of the high specific gravity material are dispersed in the rubber material; (D) molding at least a mass portion of the composite material; and (E) molding an elastic support portion integrally with the mass portion, so that the mass portion is elastically supported by the elastic support portion on a vibrating member.

Namely, in the dynamic damper constructed according to this invention, the mass portion is constituted by a composite body of an elastic body in which the particles of the high specific gravity material are dispersed so that the overall density of the composite body is increased. Accordingly, the elastic support portion can be formed integrally with the mass portion, so that the conventionally required step of securing the elastic support member to the metallic mass member is no more required, resulting in improved production efficiency. Further, the present dynamic damper is free from a problem of cracking or separation due to stress concentration at the interface between the mass portion and the elastic support portion, resulting in improved durability thereof.

Further, the dynamic damper described above does not require a rust preventing treatment which was required for the conventional dynamic damper comprising a metallic mass member. Thus, the production efficiency of the present dynamic damper can be further improved.

In this dynamic damper, the natural vibration frequency can be easily tuned by suitably adjusting the amount of the particles mixed in the composite body which forms the mass portion, or by suitably selecting the kind (specific gravity) of the particles, without having to change a mold.

In the dynamic damper according to the present invention, both of the mass portion and the elastic support portion can be formed of the composite body which is the elastic body containing the particles of the high specific gravity material dispersed therein. However, only the mass portion may be formed of the composite body, while the elastic support portion is formed of an elastic body wherein the particles of the high specific gravity material are not dispersed. This arrangement facilitates a wide range of tuning of the elastic properties of the elastic support portion, while assuring improved durability of the elastic support portion.

In the dynamic damper according to the present invention, the specific gravity of the particles which are dispersed in the composite body forming the mass portion is not particularly limited, provided it is higher than that of the elastic body. The specific gravity of the particles is preferably 3.0 or higher, more preferably, 4.0 or higher, so that the dynamic damper exhibits effective damping characteristics, while preventing a considerable increase in the size of the mass portion. As the material of the particles, metal or compounds such as lead oxides, tungsten carbides and zinc oxides may be preferably employed. In this case, the particles having a high specific gravity are available at a reduced cost, leading to economical production of the dynamic damper.

In the dynamic damper according to the present invention, the size of the particles dispersed in the composite body forming the mass portion is not particularly limited, provided that it is suitably selected so as not to give an adverse influence on the production of the dynamic damper. The particles preferably have the largest outer size of not larger than 100µm, more preferably 10-30 µm. The particle size within the above preferable ranges prevents considerable deterioration or variation of physical properties of the elastic body, such as spring characteristic, elongation and durability, which would take place due to the mixing the high specific gravity material particles in the elastic body, while effectively preventing adverse influences on a molding apparatus or other apparatus used for producing the dynamic damper. The largest outer size means the largest linear distance between two points on the outer surface of the particle.

Further, the outer shape of the particles dispersed in the composite body forming the mass portion of the present dynamic damper is suitably selected, without any particular limitation, so as not to give an adverse influence on the production of the dynamic damper. The particles preferably have a generally spherical shape (including an egg shape or a Rugby ball shape), so as to reduce the stress concentration upon deformation of the elastic body, and to thereby improve the durability of the elastic body, and effectively prevent a variation in the physical properties of the elastic body due to orientation of the particles.

In the dynamic damper according to the present invention, the structure for attaching the elastic support portion to the vibrating member is not particularly limited. For instance, it may be possible to secure in advance a bracket made of metal or the like, to the elastic support portion, so that the dynamic damper can be easily installed on the vibration member.

On the other hand, the molding material used for a dynamic damper according to the present invention can be effectively use to produce the dynamic damper constructed according to the invention. In particular, the mass portion can be molded by injecting the molding material of the dynamic damper directly into a suitable mold. Thus, the step of setting the mass portion in the mold is not necessary, whereby the production of the dynamic damper can be considerably simplified.

In the present molding material of the dynamic damper, the mixing ratio of the particles of the high specific gravity material can be suitably determined, without any particular limitation, in view of the required properties of the dynamic damper. When the mixing ratio of the particles of the high specific gravity material is not larger than 50% of the total volume of the molding material consisting of the rubber material and the particles of the high specific gravity material, for example, the elastic body may be advantageously prevented from being deteriorated in its physical properties, such as spring characteristic, elongation and strength, due to the mixing of the particles of the high specific gravity material in the elastic body.

In accordance with the method of producing a dynamic damper of the present invention, the dynamic damper constructed according to the present invention can advantageously be produced.

In the method of producing the dynamic damper according to the invention, both of the mass portion and the elastic support portion can be formed of the composite material containing the particles of the high specific gravity material dispersed therein. It may also be possible to form the elastic support portion of a rubber material wherein the particles of the high specific gravity material are not dispersed. The use of this rubber material for the elastic support portion permits an easy tuning of a spring constant and the like of the elastic support portion, while assuring a desired mass of the mass portion. In this case, the freedom of design of the dynamic damper can be increased, and the durability of the elastic support portion can be further improved.

When the elastic support portion is formed of the rubber material which does not contain the particles of the high specific gravity material, or a rubber material different from that used for forming the mass portion, the dynamic damper may be formed in a molding method similar to a so-called "bicolor molding", in which the molding material of the mass portion and the molding material of the elastic support portion are injected through different injection holes of the mold, so that the dynamic damper can be easily molded with high stability.

In the method of producing the dynamic damper according to the present invention, the rubber material for molding the elastic support portion may be the same as the rubber material for molding the mass portion. In this case, the mass portion and the elastic support portion can be formed as a completely integral structure, assuring further increased durability of the dynamic damper.

### BRIEF DESCRIPTION OF THE DRAWINGS

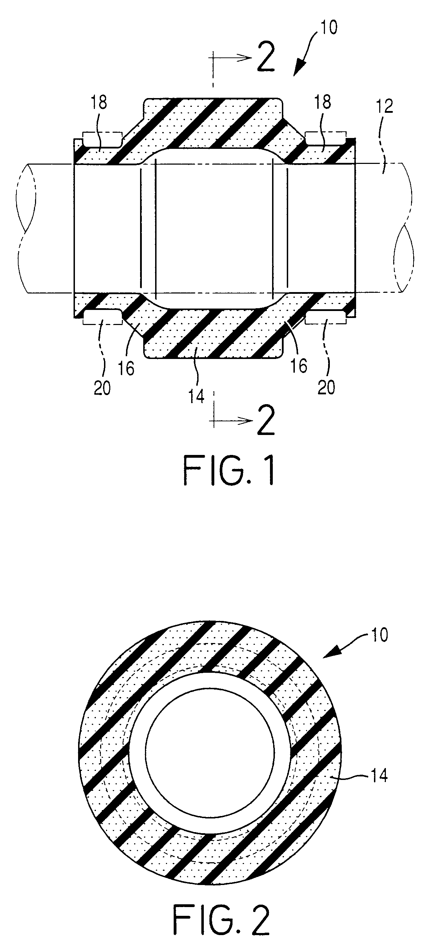

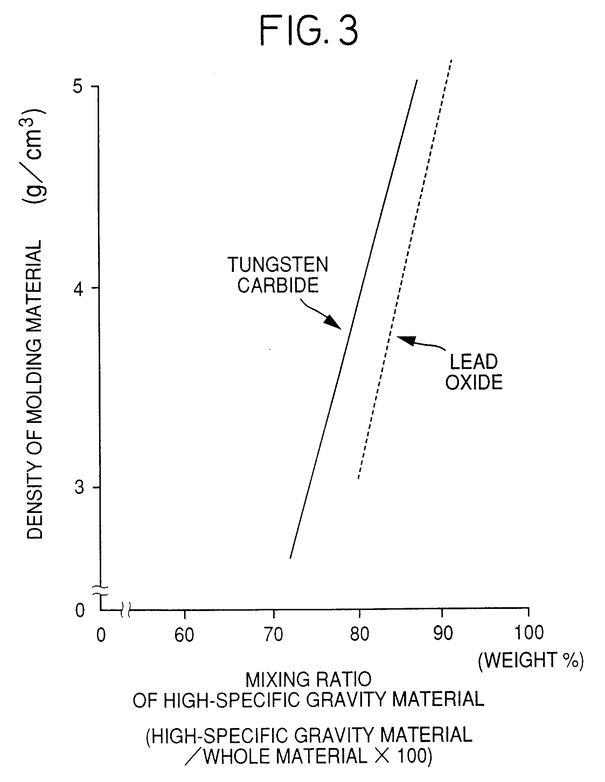

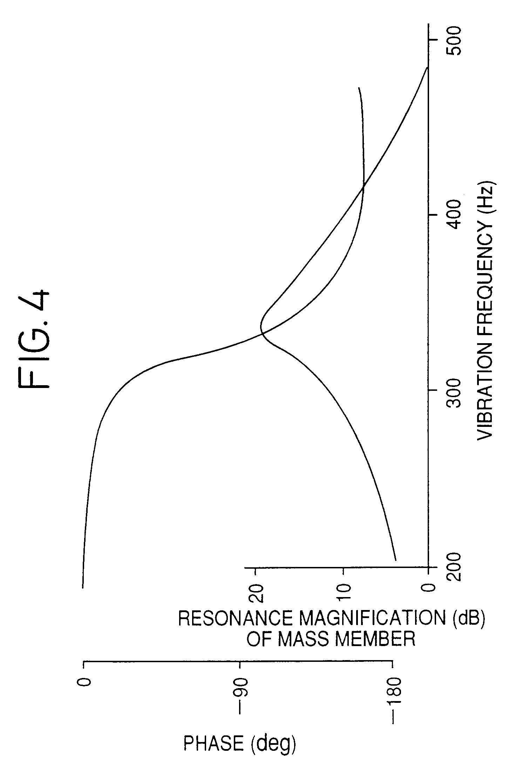

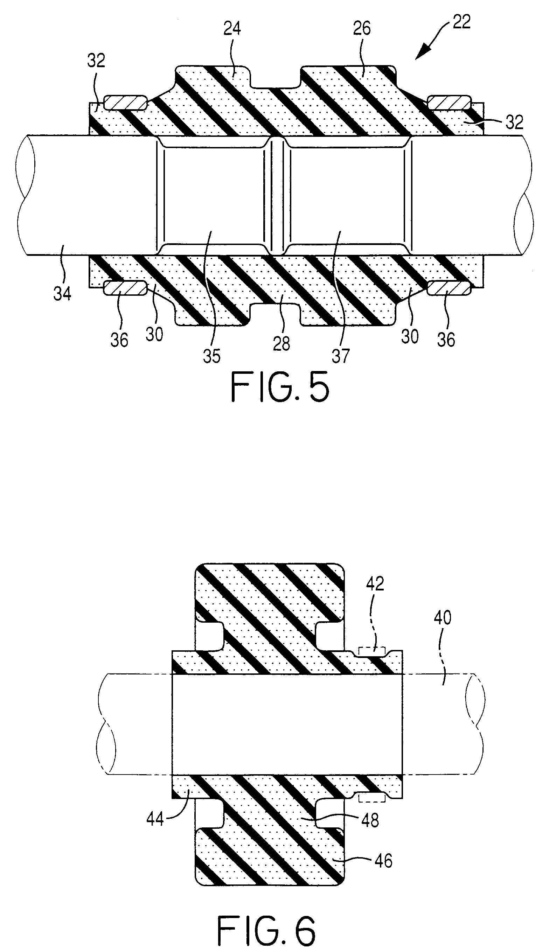

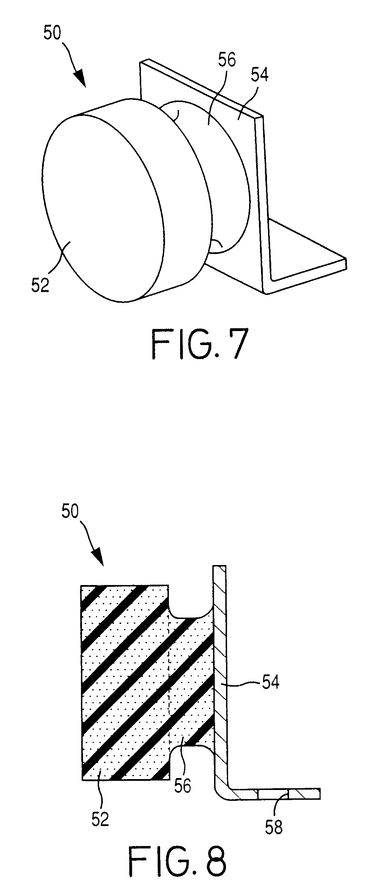

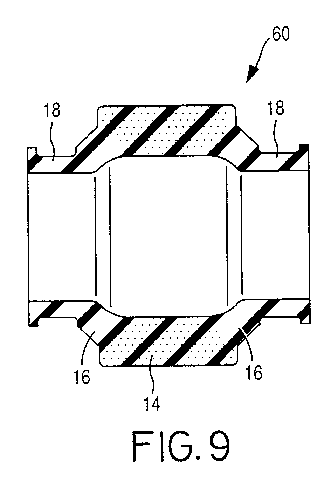

Fig. 1 is a longitudinal cross sectional view showing one embodiment of a dynamic damper of the present invention. Fig. 2 is a cross sectional view taken along line II-II of Fig. 1. Fig. 3 is a graph indicating specific examples of a relationship between a mixing ratio of particles of a high specific gravity material in the molding material used for the dynamic damper shown in Fig. 1, and a density of the molding material. Fig. 4 is a graph indicating the measurement of properties of the dynamic damper shown in Fig. 1. Fig. 5 is a longitudinal cross sectional view showing another embodiment of the dynamic damper of the present invention. Fig. 6 is a longitudinal cross sectional view showing yet another embodiment of the dynamic damper of the present invention. Fig. 7 is a perspective view showing yet another embodiment of the dynamic damper of the present invention. Fig. 8 is a longitudinal cross sectional view of the dynamic damper shown in Fig. 7. Fig. 9 is a longitudinal cross sectional view showing yet another embodiment of the dynamic damper of the present invention.

### BEST MODE FOR CARRYING OUT THE INVENTION

To clarify further the present invention, there will be described the embodiments of the invention in detail by reference to the drawings.

Referring first to Figs. 1 and 2, there is illustrated one embodiment of a dynamic damper 10 of the present invention. The dynamic damper 10 has a generally cylindrical shape, and is fitted on a drive shaft 12 of an automobile, so as to reduce bending vibrations of the drive shaft 12.

More specifically described, the dynamic damper 10 of the present embodiment includes a mass portion 14 extending in an axial direction over a suitable axial length at its axially middle portion. The mass portion 14 has a cylindrical shape with a relatively large wall thickness, and has an inside diameter that is larger than the outside diameter of the drive shaft 12 by a predetermined amount. The mass portion 14 also includes a pair of elastic support portions 16, 16 formed integrally with the opposite axial end portions of the mass portion 14. Each of the elastic support portions 16, 16 has an tapered shape and extends axially outwards from the corresponding axial end portions of the mass portion 14 such that the diameter of each elastic support portion 16 gradually decreases as the portion 16 extends in the axially outward direction. A pair of cylindrical attaching portions 18, 18 are formed integrally with the small-diameter axial ends of the elastic support portions 16, 16. Each of the attaching portions 18, 18 has a cylindrical shape with a relatively small wall thickness and has an inside diameter that is substantially equal to the outside diameter of the drive shaft 12.

The dynamic damper 10 constructed as described above is fitted and mounted on the drive shaft 12 such that the two attaching portions 18, 18 are fixed to the drive shaft 12 by means of retainer bands 20, 20, which are wound on the outer surfaces of the attaching portions 18, 18. In this condition of the dynamic damper, the mass portion 14 is disposed substantially coaxially with the drive shaft 12, and spaced apart from the drive shaft 12 in the radially outward direction by a predetermined radial distance. The mass portion 14 is elastically supported by the pair of elastic support portions 16, 16 for connection thereof with the drive shaft 12.

In the instant embodiment, the entirety of the dynamic damper 10 including the mass portion 14 is integrally formed of a composite body which is an elastic body in which there are dispersed particles of a material having a high specific gravity. This dynamic damper 10 may be advantageously produced in the following method, for example.

Initially, a rubber material is selected in view of basically required properties of the dynamic damper 10, such as heat resistance and oil resistance. As this rubber material, NR rubbers, synthetic rubbers such as SBR, and various other conventionally known rubber materials may be employed. The selected rubber material is mixed with the particles of the high specific gravity material having a relatively high specific gravity, whereby the molding material (composite material) of the dynamic damper is prepared.

The high specific gravity material may be selected from various materials such as metal and ceramic, which do not react with the selected rubber material and have a higher specific gravity than an elastic body formed of the selected rubber material. For obtaining the desired mass of the mass portion 14 by a relatively small amount of use of the particles of the high specific gravity material, while maintaining a relatively small size of mass portion 14, the specific gravity of the material which is employed for the dynamic damper 10 is preferably 3.0 or higher, and more preferably 4.0 or higher, since the elastic body of the rubber material generally has a specific gravity of 0.9-1.0. Among these high specific gravity materials, metal may be preferably employed in view of its relatively high specific gravity, its cheapness and its ease of processing. Compounds such as lead oxides, tungsten carbides and zinc oxides, may be also preferably employed as the high specific gravity material, since these compounds have a high specific gravity than the iron used for the mass member in the conventional dynamic damper. The outer shape of the particles of the high specific gravity material is not particularly limited. However, the particles having an excessively large outer size may cause deterioration of physical properties of the elastic body, such as elasticity, elongation and tensile strength, and may also cause damage of a molding apparatus due to sticking of the particles during molding. Thus, the largest outer size of all the particles of the high specific gravity material is preferably 100 µm or smaller, more preferably, within a range of 10 µm to 30 µm.

Accordingly, the molding material of the dynamic damper prepared by mixing the particles of the high specific gravity material with the rubber material has a higher density than the rubber material alone. As a specific example, Fig. 3 shows the densities of the molding materials prepared by mixing the particles of the high specific gravity materials respectively consisting of lead oxide and tungsten carbide with NR rubber. In Fig. 3, the mixing ratio of the particles of the high specific gravity material is the weight (%) proportion of the particles of the high specific gravity material with respect to the total weight of the material which consists of the rubber material including a raw rubber and various additives, and the particles of the high specific gravity material.

When an excessively large amount of the high specific gravity material particles is mixed in the rubber material, the physical properties of the elastic body such as the elasticity, elongation and tensile strength, may be deteriorated. In the instant embodiment in which the mass portion 14 and the elastic support portions 16, 16 are formed of the same material, the excessively large amount of the high specific gravity material particles may have a bad influence upon the spring constant and damping coefficient of the elastic support portions 16, 16. Therefore, the mixing portion of the particles of the high specific gravity material is preferably not larger than 50 % by volume with respect to the entire material consisting of the rubber material and the high-specific gravity material particles.

The molding material of the dynamic damper prepared by mixing the high specific gravity material particles with the rubber material is injected into a mold having a molding cavity corresponding to the outer shape of the desired dynamic damper 10. Then, the material is cross-linked by heating so as to form an elastic body, whereby the desired dynamic damper 10 is obtained.

Namely, in the dynamic damper 10 constructed as described above, the mass portion 14, the elastic support portions 16, 16, and the attaching portions 18, 18 are formed integrally with each other. More over, the mass portion 14, the elastic support portions 16, 16, and the attaching portions 18, 18 are all formed so as to consist a composite body consisting of the elastic body and the particles of the high specific gravity material dispersed therein.

Accordingly, in the dynamic damper 10 as described above, the mass portion 14 having a relatively large mass can be formed integrally with the elastic support portions 16, 16, unlike the metallic mass member as employed in the conventional dynamic damper. Thus, it is not necessary to perform the cumbersome treatments for bonding the elastic support portions 16, 16 to the mass portion 14 and preventing the rusting of the metallic mass portion, as required for the conventional dynamic damper. Further, it is not necessary to perform an operation for setting the metallic mass portion in the mold for molding the dynamic damper 10. Consequently, the ease and efficiency of production of the dynamic damper 10 is drastically improved.

In the dynamic damper 10 of the instant embodiment, the mass portion 14 and the elastic support portions 16, 16 constitute a completely integral body, in which the concentration of stresses between the mass portion 14 and the elastic support portions 16, 16 can be reduced or eliminated, preventing the cracking or separation of these portions, whereby the dynamic damper 10 exhibits excellent durability.

The natural vibration frequency of the dynamic damper 10 can be tuned by changing the mass of the mass portion 14 by adjusting the size thereof, or by changing the spring constant of the elastic support portions 16, 16 by adjusting the thickness, length, shape and stiffness thereof, as in the conventional dynamic damper. Moreover, the natural vibration frequency of the dynamic damper 10 can also be tuned by changing the mass of the mass portion 14 or spring constant of the elastic support portion 16 by suitably selecting the kind (specific gravity) of the high specific gravity material, or by adjusting the amount of mixture of the particles of the high specific gravity material. Therefore, the dynamic damper 10 assures easy tuning of the natural vibration frequency thereof without having to change the mold.

The dynamic damper 10 constructed as described above was formed of the composite material wherein the particles of lead oxide as the high specific gravity material are mixed in a NR rubber material, in a proportion of 84% by weight with respect to the total weight of the molding material. Each of the lead oxide particles has a spherical shape and a diameter of about 20µm. This dynamic damper 10 exhibited excellent damping characteristics, as shown in Fig. 4.

The dynamic damper 10 as described above does not require an elastic covering layer which was provided to cover the metallic mass member of the conventional dynamic damper for preventing the rusting of the metallic mass member. This makes it possible to obtain the desired mass of the mass portion 14. When the composite material employed includes the particles of lead oxide as the high specific gravity material mixed therein, in a proportion of 90% by weight with respect to the total weight of the molding material, for example, the mass of the mass portion 14 can be made equal to that of the conventional metallic mass member, by simply increasing the outer diameter of the mass portion 14 by only about 2mm as compared with that of the conventional metallic mass member.

While the embodiment of the present invention has been described in detail for the illustrative purpose only, it is to be understood that the invention is not limited to the details of the illustrated embodiment.

For instance, the specific construction of the dynamic damper according to the present invention is not limited to the above-illustrated embodiment, but may be suitably determined in view of the kind of the vibrating member on which the dynamic damper is installed, the installation space, the desired damping characteristics of the dynamic damper, and the like. The present invention is applicable to various kinds of dynamic dampers as conventionally known. It is to be understood that these applications may provide the same advantages as that of the above-described first embodiment.

Referring next to Figs. 5-9, there are shown other embodiments of dynamic dampers of the present invention which are different in construction from the above first embodiment.

The dynamic damper 22 as shown in Fig. 5, has a first mass portion 24 and a second mass portion 26 each of which has an annular shape with a relatively large wall thickness. The first and second mass portions 24, 26 are spaced apart from each other by a predetermined axial distance and are connected to each other by a cylindrical intermediate elastic support portion 28 interposed therebetween. A tapered elastic support portion 30 and a cylindrical attaching portion 32 extend from each of the mass portions 24, 26 in the axially outward direction. The first mass portion 24 has an axial length smaller than that of the second mass portion 26, so as to have a smaller mass than the second mass portion 26. The first mass portion 24, the second mass portion 26, the intermediate elastic support portions 28, the elastic support portions 30, 30 and the attaching portions 32, 32 are integrally formed of the composite material prepared by mixing the rubber material with particles of the suitably selected high specific gravity material, as in the above-described first embodiment.

The dynamic damper 22 as constructed above is fitted on a rod-shaped vibrating member 34, such as a drive shaft, such that the attaching portions 32, 32 at the opposite axial ends of the dynamic damper 22 are fixed to the rod-shaped vibrating member 34 by means of the retainer bands 36, 36 wound on the attaching portions 32, 32. The rod-shaped vibrating member 34 has small diameter portions 35, 37 provided at its portions corresponding to the first and second mass portions 24, 26, so that each of the first and second mass portions 24, 26 is elastically supported and connected to the rod-shaped vibrating member 34, at its opposite axial ends, by the elastic support portions 30, 30 and the intermediate elastic support portion 28.

Namely, in the dynamic damper 22 constructed as described above, the first and second mass portions 24, 26 constitute two damper systems. Since the masses of the first and second mass portions 24, 26 are different from each other, the natural vibration frequencies of the two damping systems are accordingly different from each other. Thus, the dynamic damper 22 is capable of exhibiting a damping effect with respect to the input vibrations in different frequency ranges.

Referring next to Fig. 6, there is shown a dynamic damper 38 having an cylindrical attaching portion 44 which is fitted on a rod-shaped vibrating member 40 and secured thereto by means of a retainer band 42. The dynamic damper 38 includes a cylindrical mass portion 46 with a relatively large wall thickness, which is disposed radially outwardly of the attaching portion 44 and is spaced apart from the mass portion 46 by a predetermined radial distance. An annular elastic support portion 48 is interposed between the attaching and mass portions 44, 46. The attaching portion 44, the mass portion 46 and the elastic support portion 48 are integrally formed of the composite material prepared consisting of the rubber material mixed with particles of the selected high specific gravity material, as in the above-described first embodiment.

In the present dynamic damper 38, the elastic support portion 48 undergoes shearing deformation when the mass portion 46 is displaced in the axial and circumferential directions. Therefore, the elastic support portion 48 may be adapted to have relatively small spring constants in the axial and circumferential directions, so that the dynamic damper 38 can be easily tuned so as to exhibit an excellent damping effect with respect to the axial and torsional vibrations of the rod-shaped vibrating member 40.

Referring next to Figs. 7 and 8, there is shown a dynamic damper 50, wherein a mass portion 52 having a disk shape with a relatively large thickness and an elastic support portion 56 are formed integrally with each other, such that the elastic support portion 56 protrudes axially from one of the axially opposite end faces of the mass portion 52. The mass portion 52 is positioned to face a bracket 54 having an L shape in vertical cross section, and is spaced apart from the bracket 54 by a predetermined distance. The mass portion 52 and the bracket 54 are elastically connected to each other by the elastic support portion 56 interposed between the opposite surfaces thereof. The mass portion 52 and the elastic support portion 56 are integrally formed of the composite material prepared by mixing the rubber material with particles of the selected high specific gravity material, as in the above-described first embodiment. The elastic support portion 56 is bonded integrally to the bracket 54 by vulcanization.

The dynamic damper 50 as described above is equipped with the bracket 54 which can be attached to an vibrating member by means of bolts or the like, which are inserted through mounting holes 58. Therefore, the dynamic damper 50 can be easily installed on various kinds of vibrating members other than the rod-shaped member.

Referring next to Fig. 9, there is shown a dynamic damper 60 which has the mass portion 14, elastic support portions 16, 16 and attaching portions 18, 18, as in the above-described first embodiment. However, only the mass portion 14 is formed of the composite material prepared by mixing the rubber material and particles of the selected high specific gravity material, and the elastic support portions 16, 16 and the attaching portions 18, 18 are formed of a rubber material which does not contain particles of the high specific gravity material mixed therein. The dynamic damper 60 as described above, may be suitably produced by using, for example, a mold which has a cavity corresponding to the shape of the entire dynamic damper 60. The composite material prepared by mixing the rubber material with particles of the high specific gravity material is injected through an axially middle portion of the mold, and the rubber material which does not contain particles of the high specific gravity material is injected through axially opposite end portions of the mold. The rates of injection of these composite materials are adjusted to ensure that two composite materials meet each other at the positions corresponding to the interfaces of the mass portion 14 and the elastic support portions 16, 16. It is desirable that the rubber material for forming the elastic support portions 16, 16 and the attaching portions 18, 18 be similar to the rubber material of the composite material for the mass portion 14, so that these rubber materials are closs-linked so as to form the mass portion 14 and the elastic support portions 16, 16, as an integral body, which permits the dynamic damper 60 to exhibit excellent durability.

The elastic support portion 16 of the dynamic damper 60 can exhibit desired physical properties as an elastic body, such as elasticity, elongation and tensile strength.

It is also to be understood that the present invention may be embodied with various other changes, modifications and improvements which may occur to those skilled in the art, without departing from the spirit and scope of the invention.

### POSSIBILITY OF UTILIZING IN INDUSTRY

As is apparent from the above explanation, the present invention is applicable to a dynamic damper which is used as vibration damping or controlling means in various mechanical devices such as those used in an automobile. The present invention can advantageously provide a dynamic damper having simple construction, and a method by which the dynamic damper can be easily produced.

## Claims

1. A dynamic damper characterized by comprising:
a mass portion constituted by a composite body consisting of an elastic body and particles of a high specific gravity material which are dispersed in said elastic body, said high-specific gravity material having a higher specific gravity than said elastic body; and
an elastic support portion which is formed integrally with said elastic body of said composite body which constitutes said mass portion, said elastic support portion being secured to a vibrating member so that said mass portion is elastically supported on said vibrating member by said elastic support portion.

2. A dynamic damper according to claim 1, wherein said particles of said high specific gravity material are not dispersed in said elastic support portion.

3. A dynamic damper according to claim 1, wherein each of said particles of said high specific gravity material has a specific gravity of 3.0 or higher.

4. A dynamic damper according to claim 1, wherein said particles of said high-specific gravity material consist of particles of at least one compound selected from a group consisting of lead oxides, tungsten carbides and zinc oxides.

5. A dynamic damper according to claim 1, wherein said particles of said high specific gravity material are metallic particles.

6. A dynamic damper according to claim 1, wherein said particles of said high specific gravity material have a largest outer size of not larger than 100µm.

7. A dynamic damper according to claim 1, wherein said particles of said high-specific gravity material have a largest outer size of 10-30 µm.

8. A dynamic damper according to claim 1, wherein each of said particles of said high-specific gravity material has a generally spherical shape.

9. A dynamic damper according to claim 1, wherein a bracket is secured to said elastic support portion for attaching said elastic support portion to said vibrating member.

10. A molding material of a dynamic damper characterized in that:
particles of a high specific gravity material are mixed with and thereby dispersed in a rubber material, said high specific gravity material having a higher specific gravity than an elastic body formed of said rubber material.

11. A molding material of a dynamic damper according to claim 10, wherein said particles of said high specific gravity material are mixed in an amount of not larger than 50% by volume with respect to a total volume of said molding material consisting of said rubber material and said particles of said high specific gravity material.

12. A method of producing a dynamic damper characterized by comprising the steps of:
preparing a composite material by mixing a rubber material and particles of a high specific gravity material having a higher specific gravity than an elastic body formed of said rubber material, such that said particles of said high specific gravity material are dispersed in said rubber material;
molding at least a mass portion of said composite material; and
molding an elastic support portion integrally with said mass portion, so that said mass portion is elastically supported by said elastic support portion on a vibrating member.

13. A method of producing a dynamic damper according to claim 12, wherein said elastic support portion is molded of a rubber material which does not contain said particles of said high specific gravity material.

14. A method of producing a dynamic damper according to claim 13, wherein said rubber material for molding said elastic support portion is injected into a mold provided for molding said mass portion and said elastic support portion, before, after or when said composite material for molding said mass portion is injected into said mold, an injection hole of said mold through which said rubber material is injected being different from an injection hole through which said composite material is injected.

15. A method of producing a dynamic damper according to claim 12, wherein a rubber material for molding said elastic support portion is the same as said composite material for molding said mass member.
